Europäisches Patentamt

European Patent Office

Office européen des brevets

(11) Publication number: **0 017 497**
**A1**

## (12) EUROPEAN PATENT APPLICATION

(21) Application number: **80301092.5**

(22) Date of filing: **03.04.80**

(51) Int. Cl.³: **A 01 G 13/04**

(30) Priority: **07.04.79 GB 7912307**
**20.10.79 GB 7936472**

(43) Date of publication of application:
**15.10.80 Bulletin 80/21**

(84) Designated Contracting States:
**AT BE CH DE FR IT LI LU NL SE**

(71) Applicant: **BONAS BROTHERS LIMITED**
**Castle Gresley**
**Nr. Burton-on-Trent Staffordshire(GB)**

(72) Inventor: **Hilton, William James**
**14 Highfields Close**
**Ashby De La Zouch Leicestershire(GB)**

(74) Representative: **Low, Peter John et al,**
**WILSON, GUNN & ELLIS 41 Royal Exchange**
**Manchester, M2 7DB(GB)**

(54) Horticultural enclosure and method for making it.

(57) A horticultural enclosure that comprises a translucent flexible cover (10) of plastics to which narrow strips (12) of the same material are welded at intervals to form rows of pockets (14). The cover is fitted on a frame, the interconnecting members (20) of which are received in the pockets, the tension in the cover being such as to hold the frame together without any additional fastening means. The cover can readily be made by a continuous method.

EP 0 017 497 A1

./...

Croydon Printing Company Ltd.

_Fig.1_

## HORTICULTURAL ENCLOSURE

This invention relates to a horticultural enclosure and more particularly a frame or cloche.

It is now common horticultural practice to use frames or cloches made of flexible plastics sheet supported at intervals so as to form a kind of tunnel. One of the problems with such cloches is the provision of a satisfactory connection between the supports and the plastic cover sheet.

The present invention has been made from a consideration of this problem.

According to the invention there is provided a horticultural enclosure comprising a flexible cover strip, at least two rows of pockets extending along said strip for receiving transverse support members.

The rows of pockets are preferably arranged one adjacent each edge of the cover and preferably with the pockets in each row opposite each other. More than two rows of pockets may be provided if desired, the pockets of the additional rows being preferably in register with the pockets in the other rows.

In one embodiment of the invention the cover strip is divided longitudinally into two parts, generally substantially along the middle of the cover strip. A flap or other suitable releasable fastening means is preferably provided where the cover is divided. Preferably additional pockets in register with the pockets for the supports at the edges of the cover strip, are provided adjacent the edges of the intermediate longitudinal division of the cover strip.

The invention also provides a method for making a cover for a horticultural enclosure comprising applying a flexible narrow strip along a flexible cover, securing the narrow strip at intervals along the cover strip so as to form a plurality of pockets adjacent the edges of the cover.

In another embodiment of the invention the support members comprise an interconnectable frame upon which the cover is fitted. The tension in the cover when fitted on the frame is sufficient to keep the frame parts connected together and no special fastening means for the frame parts is necessary. In this embodiment the cover is preferably in the form of a continuous piece.

The pockets for the supports are preferably formed by welding the narrow strips to the cover. Welding of the narrow strip to the cover is discontinuous, thereby forming pockets at intervals as desired. Preferably an intermediate narrow strip is also welded in a similar
discontinuous fashion to the cover, the cover and
intermediate narrow strip being then severed when a
two part cover is required.

The invention also provides apparatus for producing
a cloche cover comprising a welding head, means for
intermittently feeding flexible cloche cover strip to
the welding head, means for feeding intermittently with the
cover strip narrow strips placed on the cover one adjacent
each edge of the cover, the welding head being adapted to
weld the narrow strip to the cover strip at intervals so
as to produce a plurality of pockets.

A specific embodiment of the invention will now be
described by way of example with reference to the
accompanying drawings in which:-

Fig.1 is a perspective view of a cloche;

Fig.2 shows the cloche of Fig.1 with the top
open;

Fig.3 is a diagrammatic representation of
apparatus for making a cover for the
cloche;

Fig.4 is a diagrammatic representation of part
of the apparatus of Fig.3; and

Figs.5 and 6 show a different embodiment of a
cloche embodying the invention.

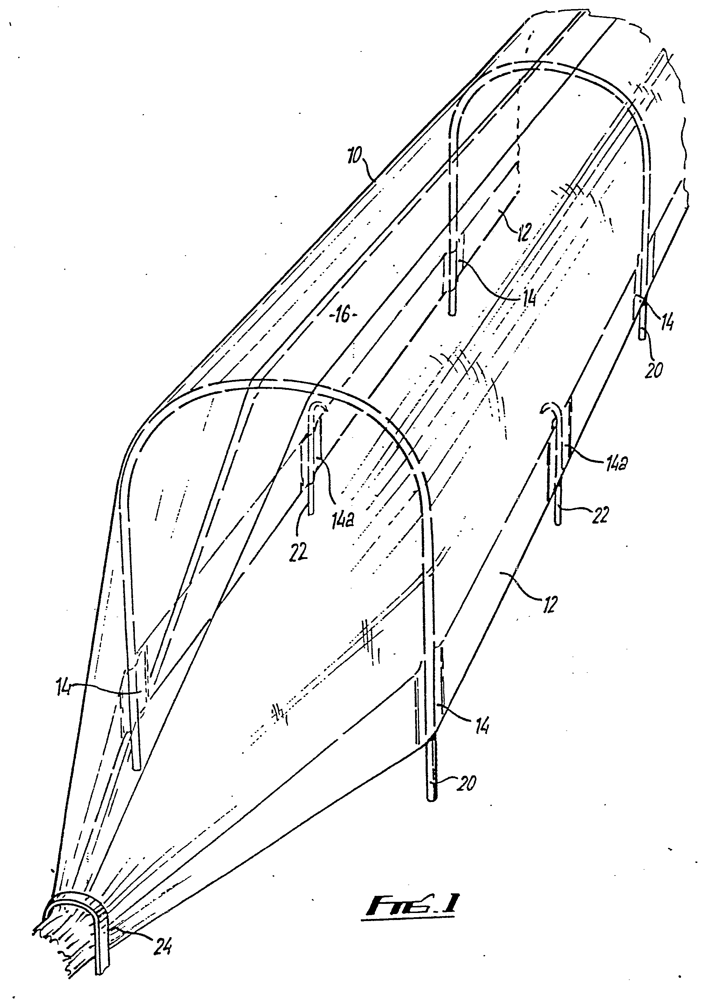

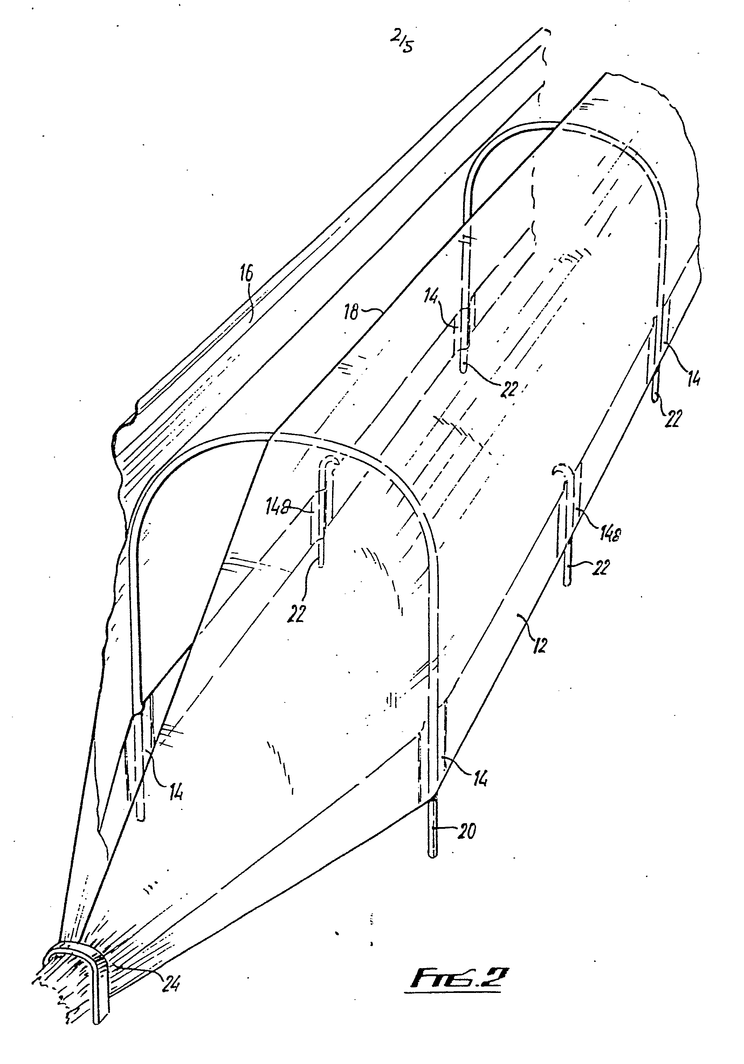

Referring to Figs.1 and 2 of the drawings the cloche comprises a cover strip 10 of flexible transparent plastics material for example polyvinylchloride. A narrow strip 12, preferably of the same material as the cover strip, extends along each longitudinal edge of the cover 10. Each strip 12 is welded along its longitudinal edges to the cover except at spaced intervals thereby forming pockets 14. Each pocket in each narrow strip 12 is preferably opposite a pocket in the other strip 12. Also, if desired, the strips 12 may be transversely welded to the cover 10 on either side of the pockets. Additional pockets 14a may be provided between pockets 14.

A third narrow strip 16 extends longitudinally along the cover and intermediate the edges thereof. The third narrow strip is also welded along its edges to the cover strip 10 except at intervals corresponding to the pockets 14 in the strips 12 so as to form pockets in the strip 16. The cover is divided longitudinally into two parts by a continuous cut made therethrough and through strip 16. Preferably the cut aforesaid is adjacent one edge of strip 16.

In use the cover is supported by hoops 20, each hoop is threaded through a pair of pockets 14 on opposite sides of the cover and also through the appropriate pockets at each side of the strip 16. The cover is arranged on the hoops, as shown in Fig.1, so that the cut edge carrying the major part of strip 16 overlies the other cut edge 18. The pockets 14a are used to accommodate pegs 22, preferably of plastics, for holding down the outer edges of the cover. The ends of the cover are gathered into a bunch and pegged down as at 24.

Fig.2 illustrates how the cover can be opened up to allow ventilation and access for watering and other horticultural needs. If ventilation from the ends is required that may be readily effected by inserting a spacer between the two parts of the cover at the ends thereof.

The cover for the cloche is preferably formed as a long strip which can be stored in the form of a roll. Lengths, chosen as desired, can be drawn off the roll for use. The continuous narrow strips 12 and 16 in addition to providing pockets also help to strengthen the cover at those places where increased strength is most needed. Moreover the strips 12 and 16 do not impede gathering into bunches at each end of the cloche.

The cover for the cloche can be made by the apparatus

- 6 -

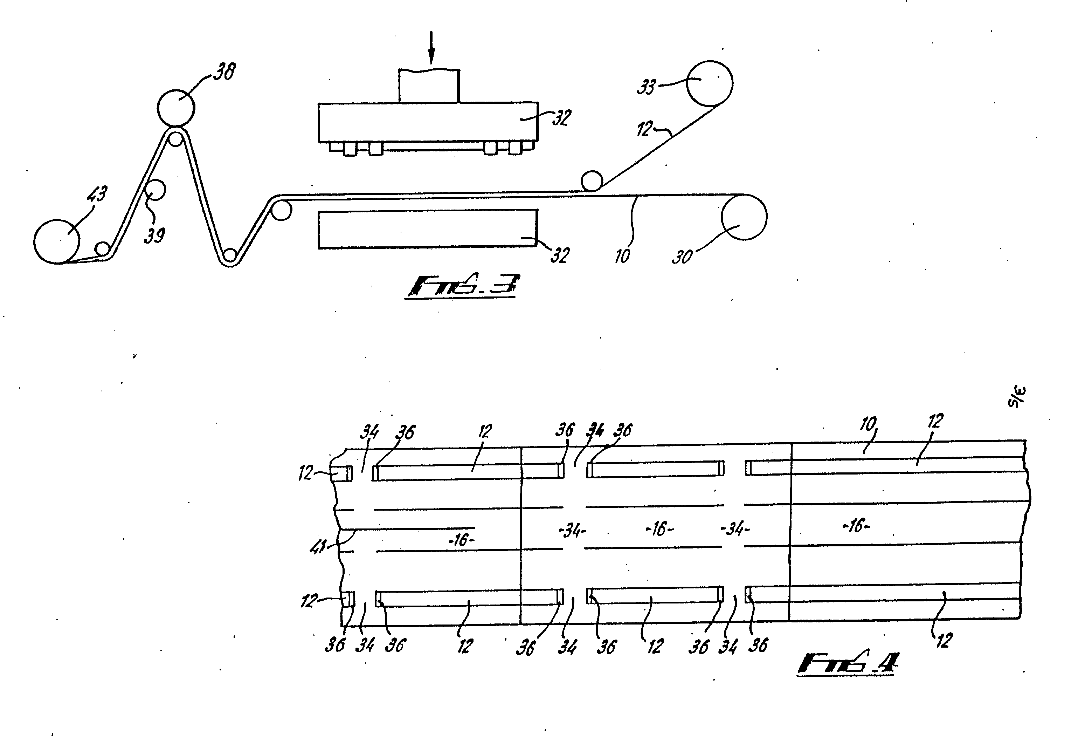

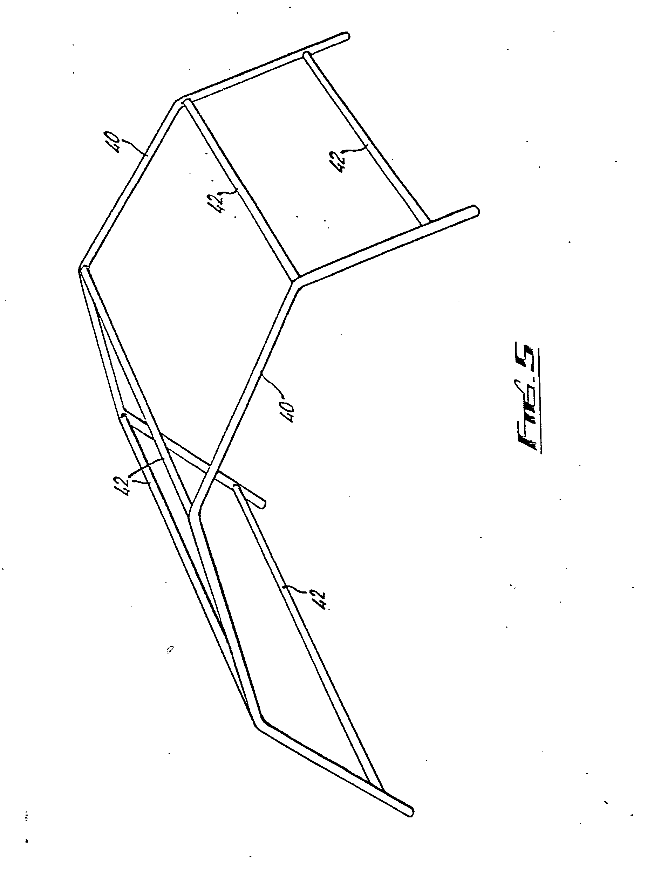

which will now be described with reference to Figs.3 and 4.

Cover material 10 is led from a roll 30 through a welding press 32. Upstream of the press narrow strips 12 from a roll 33 are positioned, one at each edge of the cover and narrow strip 16 from a roll (not shown) is laid on the cover intermediate the edges. The cover 10 and strips 12 and 16 are drawn into the press by draw-off roller 38 which is arranged to stop when a length of cover and strips equivalent to the length of the welding press has been advanced. The press then closes and the strips 12 and 16 are welded to the cover 10 along their edges except at intervals referenced 34 in Fig.4. These intervals form the pockets 14 and 14a in the strips 12 and pockets in the strip 16. The welding press also provides transverse welds 36 across the strips 12 on either side of the intervals 34. When welding, which may be high frequency welding, is completed the cover material is advanced again and the next length positioned in the welding press. As the cover advances it is led over a cutter 39 which severs the cover and strip 16 to form a longitudinal cut 41. The cover is then wound up on a roll 43.

It is not essential to separate the cover into two parts, as described. In cases where access to the cloche is not required the cutter 39 can be omitted and the strip 16 welded continuously, there being no need for pockets in strip 16 if the cover is in one piece.    In this case
the strip 16 merely serves as reinforcement and may,
if desired, be omitted.

When the cover is in one piece ventilation can be
provided by cutting a slit in the cover, generally at one
or both ends and putting a spacer in the slit.    When
strip 16 is provided in a one piece cover the slit is
preferably formed through the cover and strip 16.

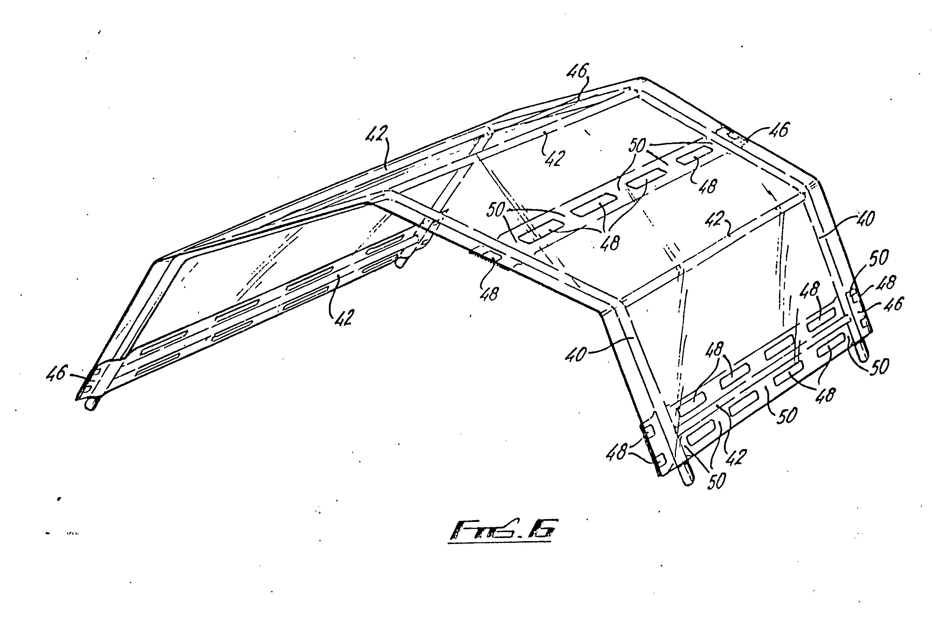

Referring now to Figs.5 and 6 in this embodiment
the cover is supported by a frame, shown with the cover
removed in Fig.5.    The frame comprises two, spaced-
apart, hoops 40 between which longitudinal rods 42 extend.
The rods 42 are hollow at least at the ends thereof and
are located in place by positioning the ends over studs
which project from the hoop at appropriate locations.
The rods 42 are a loose fit on the studs but the assembly
of hoops 40 and rods 42 is held together by the tension
in the cover 44 fitted thereon.

In the embodiment shown in Fig.6 the cover 44 is
formed from a continuous sheet of translucent material,
preferably polyvinyl chloride to which strips 46 of the
same material have been welded to form pockets.    In
particular strip 46 adjacent the side edge of the cover
is welded to the cover by two rows of rectangular weld lines 48. This arrangement provides pockets 50 at each end of the strip to receive hoops 40 and also defines a longitudinal channel 52 intowhich rod 42 is received. By this means both longitudinal and transverse tension in the cover is maintained.

Strips 46 intermediate the side edges are also provided. Such strips need only be fixed to the cover by a single row of discontinuous weld lines forming pockets 50 for the hoops.

The cover may be provided with apertures for ventilation and/or watering.

## CLAIMS

1.  A horticultural enclosure comprising a flexible cover strip, characterised in that at least two rows of pockets are provided, said rows extending along said strip for receiving transverse support members.

2.  An enclosure as claimed in Claim 1, wherein the rows of pockets are arranged one adjacent each edge of the cover.

3.  An enclosure as claimed in Claim 1 or Claim 2, wherein the pockets in each row are transversely opposite each other.

4.  An enclosure as claimed in any preceding claim, wherein one or more additional rows of pockets are provided.

5.  An enclosure as claimed in Claim 5, wherein the pockets in the or each additional row are in transverse register with the pockets of one or both of said two rows.

6.  An enclosure as claimed in any preceding claim, wherein the cover is divided longitudinally into two parts.

7.  An enclosure as claimed in Claim 6, wherein the cover is divided substantially along the middle thereof.

8. An enclosure as claimed in Claim 6 or Claim 7, wherein means are provided for releasably fastening the parts of the cover.

9. An enclosure as claimed in any preceding claim, wherein the support members comprise interconnectable frame parts.

10. An enclosure as claimed in Claim 9, wherein the cover is fitted on the frame such that the tension therein keeps the parts of the frame interconnected with each other.

11. An enclosure as claimed in Claim 9 or Claim 10, wherein the support members comprise at least two hoops adapted to be held in spaced-apart relationship by longitudinal members.

12. An enclosure as claimed in Claim 11, wherein the hoops are received in the pockets.

13. An enclosure as claimed in Claim 11 or Claim 12, wherein one or more longitudinal pockets are provided for receiving at least one of the longitudinal members.

14. A method for making a cover for a horticultural enclosure as claimed in any preceding claim, comprising applying at least two flexible narrow strips along a flexible cover and securing the strips at intervals along the cover so as to form pockets.

15. A method as claimed in Claim 14, wherein the two narrow strips are fixed to the cover, one adjacent each edge thereof.

16. A method as claimed in Claim 14 or Claim 15, wherein the narrow strips are secured to the cover at the same intervals thereby forming pockets transversely opposite each other.

17. A method as claimed in any of Claims 14 to 16, wherein one or more additional narrow strips are secured to the cover.

18. A method as claimed in Claim 17, wherein the or each additional narrow strip is secured to the cover to form pockets in register with the pockets of one or both said two narrow strips.

19. A method as claimed in any of Claims 14 to 18 wherein the narrow strips are secured to the cover by welding.

20. A method as claimed in any of Claims 14 to 19, wherein the cover is divided longitudinally into two parts.

FIG.1

0017497

FIG.2

FIG. 3

FIG. 4

3/5

0017497

FIG.5

Fig.6

## EUROPEAN SEARCH REPORT

European Patent Office

| Category | Citation of document with indication, where appropriate, of relevant passages | Relevant to claim | CLASSIFICATION OF THE APPLICATION (Int. Cl. 3) |
|---|---|---|---|
| | **GB - A - 1 276 171** (BUSH PLASTICS)<br>* Whole document *<br><br>-- | 1,11,<br>12,14,<br>18 | A 01 G 13/04 |
| | **US - A - 2 832 178** (ARTHURS)<br>* Whole document *<br><br>-- | 1,9,11 | |
| | **FR - A - 2 359 264** (BRUYANT)<br>* Page 2, lines 14-31; figure 4 *<br><br>---- | 6,7 | |

**TECHNICAL FIELDS SEARCHED (Int.Cl. 3)**

A 01 G 9/14
9/16
13/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

| | | | |
|---|---|---|---|
| X | The present search report has been drawn up for all claims | | |
| Place of search<br>The Hague | Date of completion of the search<br>15-07-1980 | Examiner<br>HERYGERS | |

EPO Form 1503.1   06.78